(19) Europäisches Patentamt
European Patent Office
Office européen des brevets

(11) **EP 3 346 344 A1**

(12) **EUROPEAN PATENT APPLICATION**

(43) Date of publication:
**11.07.2018 Bulletin 2018/28**

(51) Int Cl.:
**G05B 13/04** *(2006.01)* **F02C 9/00** *(2006.01)*

(21) Application number: **17209002.9**

(22) Date of filing: **20.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **04.01.2017 IN 201741000431**

(71) Applicant: **General Electric Company**
**Schenectady, NY 12345 (US)**

(72) Inventors:
• **THAZHATHIL KOYAMPURATH, Vandana**
**560066 Bangalore, KA (IN)**
• **PAULOSE, Nimmy**
**560066 Bangalore, KA (IN)**
• **KALYA, Prabhanjana**
**500081 Hyderabad, TG (IN)**

(74) Representative: **Fischer, Michael Maria**
**General Electric Technology GmbH**
**Global Patent Operation - Europe**
**Brown Boveri Strasse 7**
**5400 Baden (CH)**

(54) **METHOD FOR LOOP GAIN SIZING OF GAS TURBINES**

(57)     A method (80) includes obtaining a steady state model (68) that models a process controlled by a controller (40) of a gas turbine (10). The steady state model (68) estimates at least one output of the process based on at least one input. The method (80) includes creating a transient model (70) by perturbing at least one input of the steady state model (68) to estimate the at least one output, the at least one output comprising transient characteristics of the gas turbine (10). The method (80) includes adjusting a gain of the controller (40) continuously, at predetermined intervals, or based on a requirement trigger, or any combination thereof, based on the transient model (70). The gain defines a response to a difference between a reference signal (54) and a feedback signal (52) of the controller (40) of the gas turbine (10).

FIG. 3

EP 3 346 344 A1

**Description**

**FIELD OF THE INVENTION**

The subject matter disclosed herein relates to turbomachinery, and more particularly, to tuning control systems for gas turbines.

BACKGROUND OF THE INVENTION

In power generation systems, turbines, such as gas turbines or steam turbines, may convert fuel and air (e.g., an oxidant) into rotational energy. For example, a gas turbine may compress the air, via a compressor, and mix the compressed air with the fuel to form an air-fuel mixture. A combustor of the gas turbine may then combust the air-fuel mixture and use energy from the combustion process to rotate one or more turbine blades, thereby generating rotational energy. The rotational energy may then be converted into electricity, via a generator, to be provided to a power grid, a vehicle, or another load.

Various sub-systems of the gas turbine may be controlled to improve efficiency and/or power output of the gas turbine. For example, the gas turbine may include a proportional-integral-derivative (PID) controller that controls temperatures and/or pressures, among others. However, the PID controller may not account for non-linearities in the system, such as ambient temperatures and/or pressures, degradation, or the like. The gas turbine may operate less efficiently by not accounting for these non-linearities.

**BRIEF DESCRIPTION OF THE INVENTION**

Certain embodiments commensurate in scope with the originally claimed disclosure are summarized below. These embodiments are not intended to limit the scope of the claimed disclosure, but rather these embodiments are intended only to provide a brief summary of possible forms of the disclosure. Indeed, embodiments may encompass a variety of forms that may be similar to or different from the embodiments set forth below.

In a first embodiment, a control system for a gas turbine includes a controller configured to obtain a difference between a reference signal and a feedback signal of the gas turbine, and control a process of the gas turbine based on the difference and a gain of the controller, wherein the gain corresponds to a response of the controller with respect to the difference, and a tuner configured to obtain a steady state model configured to estimate at least one output of the process based on at least one input to the process, create a transient model by perturbing at least one input of the steady state model to estimate the at least one output, the at least one output comprising transient characteristics of the gas turbine, adjust the gain of the controller continuously or at predetermined intervals or based on a requirement trigger based on the transient model, and send the adjusted gain to the controller, wherein the controller is configured to control the process based on the adjusted gain.

In a second embodiment, a method includes obtaining, via a processor, a steady state model that models a process controlled by a controller of a gas turbine, wherein the steady state model estimates at least one output of the process based on at least one input, creating, via the processor, a transient model that models changes to the at least one output of the process by inputting the at least one input and an anticipated change in the process of the gas turbine into the steady state model, creating, via the processor, a transient model by perturbing at least one input of the steady state model to estimate the at least one output, the at least one output comprising transient characteristics of the gas turbine, adjusting, via the processor, a gain of the controller continuously, at predetermined intervals, or based on a requirement trigger, or any combination thereof, based on the transient model, wherein the gain defines a response to a difference between a reference signal and a feedback signal of the controller of the gas turbine, and sending, via the processor, the adjusted gain to the controller, wherein the controller is configured to control the process based on the adjusted gain.

In a third embodiment, a non-transitory computer readable medium comprising instructions configured to be executed by a processor of a tuner, wherein the instructions comprise instructions configured to cause the processor to obtain a steady state model that models a process controlled by a controller of a gas turbine, wherein the steady state model estimates at least one output of the process based on at least one input, create a transient model by perturbing at least one input of the steady state model to estimate the at least one output, the at least one output comprising transient characteristics of the gas turbine, adjust the gain of the controller continuously or at predetermined intervals or based on a requirement trigger based on the transient model, and send the adjusted gain to the controller, wherein the controller is configured to control the process based on the adjusted gain.

## BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:

FIG. 1 is a block diagram of a controller for a gas turbine system that controls one or more operating parameters of the gas turbine, in accordance with an embodiment;
FIG. 2 is a control system of a tuner for the controller of FIG. 1 that tunes a gain of the controller, in accordance with an embodiment; and
FIG. 3 is a flow diagram of a process performed by the control system of the gas turbine to update the gain of the controller, in accordance with an embodiment.

## DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

Embodiments of the present disclosure are related to control systems for turbomachinery, such as gas turbines, steam turbines, and/or compressors. For example, a gas turbine may include one or more compressors, a combustor, and one or more turbine blades. The gas turbine may receive an oxidant, such as air, in the one or more compressors that compress the air to a higher pressure. The air is mixed with fuel to form an air-fuel mixture that is combusted by the combustor. Energy from the combustion process is used to rotate turbine blades of the one or more turbines. The rotational energy of the turbine blades may rotate a shaft coupled to the turbine blades to drive one or more loads, such as a vehicle or an electrical generator. The electrical generator may be coupled to a power grid to provide power that is used for residential, industrial, or any other suitable purpose.

Gas turbines may include control systems that control one or more operations of the gas turbine. For example, a control system of a gas turbine may control temperature of the fuel and the oxidant, pressure of the various stages of the turbine, an air-fuel ratio entering the gas turbine, or the like. The control system may include one or more controllers, such as a proportional-integral-derivative (PID) controller, that control one or more operations of the gas turbine by determining a difference (e.g., error) between a reference signal and a feedback signal. The PID controller may reduce the difference over time by adjusting an output signal from the PID controller based on a proportional gain, an integral gain, and a derivative gain of the PID controller. For instance, the controller may control an outlet pressure of the combustor by comparing a reference signal of a desired outlet pressure to feedback from a pressure sensor on the outlet of the combustor.

The gains of the PID controller may be predetermined offline based on one or more factors that are estimated from the known components (e.g., compressor, combustor, turbine blades) of the gas turbine. However, by having preset gains, the PID controller may not account for non-linearities in the system. For example, various operating parameters, such as ambient temperatures and ambient pressures surrounding the gas turbine, as well as degradation of parts of the gas turbine, may affect operation of the gas turbine in ways that are not accounted for by the PID controller. In this example, the predetermined gains of the PID controller may reduce efficiency of the system because the ambient temperatures, ambient pressures, and degradation are not accounted for by the PID controller, thereby delaying the controller in taking steps to reduce the difference between the reference signal and the feedback signal, as compared to a controller that does account for such non-linearities.

Keeping the foregoing in mind, embodiments of the present disclosure describe systems and methods that account for non-linear parameters in controllers by adjusting the gain of the controller. For example, a control system for a gas turbine may include a tuner having circuitry to tune the gain of the controller. The tuner may obtain a steady state model that models one or more operating parameters of the gas turbine. The steady state model may generally refer to a simulated process that defines behavior of the process of the gas turbine system that is unchanging in time. While temperature and pressure may be used as examples of operating parameters, controllers of gas turbines may control any suitable operating parameter of the gas turbine. The tuner may receive various measurements from the gas turbine into the steady state model. The tuner may then insert an input (e.g., perturbation) into the steady state model to create or update a transient model that accounts for non-linearities of the gas turbine system. The transient model may be a simulated gas turbine system that defines behavior of the process performed by the gas turbine during a change of state. For example, the tuner may insert a step input into the steady state model to determine a step response. That is, the tuner may perturb the model and then estimate the system characteristics on certain inputs provided to the steady state model to determine the transient model without affecting actual operation of the gas turbine. The tuner may then determine a transfer function (e.g., s-domain input/output relationship) based on the steady state model and the transient response. The transfer function may characterize an output of part of the gas turbine with respect to an input of the gas turbine. For example, the transfer function may characterize the pressure variations within the combustor from an acoustic inside the combustor with respect to a signal that opens or closes a fuel valve to controls flow of fuel entering a fuel nozzle into the combustor The tuner may then determine gains necessary at that particular operating point based on the aforementioned transfer function to ensure required performance criteria (e.g., predetermined stability margin)

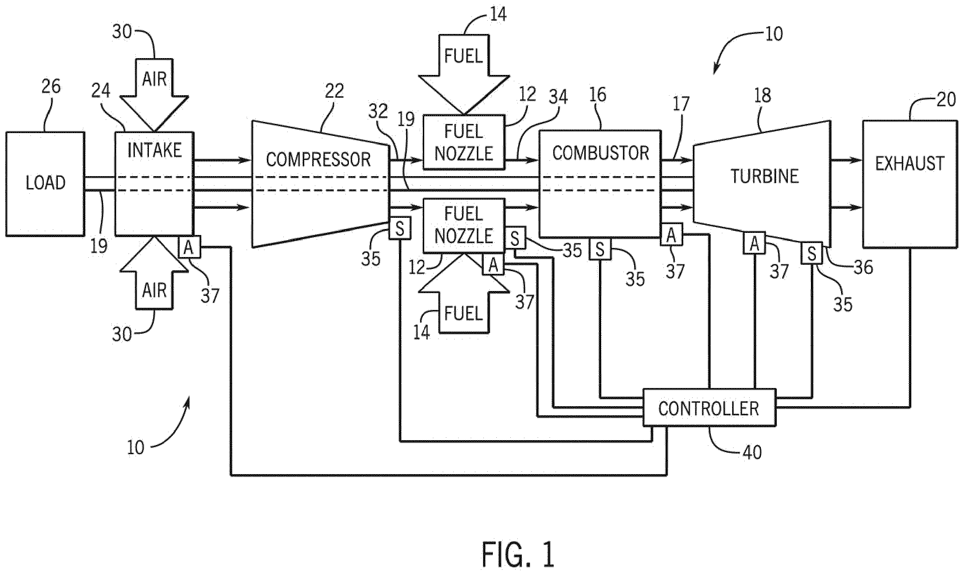

Turning now to the drawings, FIG. 1 illustrates a block diagram of an embodiment of a gas turbine system 10. The diagram includes fuel nozzles 12, a fuel supply 14, and a combustor 16. As depicted, the fuel supply 14 routes a liquid fuel and/or gas fuel, such as natural gas or syngas, to the turbine system 10 through the fuel nozzle 12 and into the combustor 16. The combustor 16 ignites and combusts the fuel-air mixture, and then passes hot pressurized combustion gases 17 (e.g., exhaust) into a turbine 18. Turbine blades may be coupled to a shaft 19, which is also coupled to several other components throughout the turbine system 10, as illustrated. As the combustion gases 17 pass through the turbine blades in the turbine 18, the turbine 18 is driven into rotation, which also causes the shaft 19 to rotate. Eventually, the combustion gas 17 may exit the turbine system 10 via an exhaust outlet 20.

In an embodiment of the turbine system 10, compressor blades may be included as components of the compressor 22. The blades within the compressor 22 may be coupled to the shaft 19, and may turn as the shaft 19 is driven to rotate by the turbine 18, as discussed above. The compressor 22 may intake air to the turbine system 10 via an air intake 24. Further, the shaft 19 may be coupled to a load 26, which may be powered via rotation of the shaft 19. By way of example, the load 26 may be any suitable device that may generate power via the rotational output of the turbine system 10, such as a power generation plant or an external mechanical load. For instance, the load 26 may include an electrical generator, a propeller of an airplane, and so forth. The air intake 24 draws air 30 into the turbine system 10 via a suitable mechanism, such as a cold air intake, for subsequent mixture of the air 30 with the fuel supply 14 via the fuel nozzle 12. The air 30 taken in by the turbine system 10 may be fed and compressed into pressurized air by rotating blades within the compressor 22. The pressurized air, shown by reference number 32, may then be fed into the fuel nozzle 12. The fuel nozzle 12 may then mix the pressurized air and fuel, shown by reference number 34, to produce a suitable mixture ratio for combustion, e.g., a combustion that causes the fuel to more completely burn, so as not to waste fuel or cause excess emissions.

The turbine system 10 also includes one or more sensors 35 to acquire measurements associated with operation of the turbine system 10. The illustrated sensors 35 are coupled to the fuel nozzle 12, combustor 16, the turbine 18, and compressor 22. In certain embodiments where the turbine system 10 is a component of, for example, a power plant, the exhaust outlet 20 may be coupled to a heat recovery steam generator (HRSG) to recover heat from the exhaust to generate steam for use in various applications such as a steam turbine, which in turn may be coupled to an exhaust stack. The exhaust stack may redirect the HRSG's exhaust gases into the atmosphere. Accordingly, the sensors 35 may also be coupled to the various power plant components, such as the HRSG and the exhaust stack.

The sensors 35 may obtain various measurements regarding fluid, temperature, pressure, and the like. That is, certain sensors 35 may be used to measure properties of a gas, a gas-liquid mixture, or a liquid. For example, certain embodiments may monitor a gas flow from the combustor 16 to detect various emissions, temperature, pressure, flow rate, fluctuations in time, variations in space, and so forth. Other sensor 35 embodiments may monitor, for example, a gas flow through the turbine 18 to detect blade anomalies, rotational efficiency, and so forth. The sensor 35 embodiments may also obtain various emission measurements. For example, the sensor 35 coupled to the compressor 22 may be an acoustic to measure compressor outlet pressure. It is noted that while PK2 compressor outlet pressure is described in detail below, any suitable measurement(s) may be monitored by the sensors 35 in accordance with embodiments described herein.

The turbine system 10 may include one or more actuators 37 (e.g., valves) that control operating parameters of the turbine system 10. In the illustrated embodiment, the turbine system 10 includes a premix fuel valve that controls flow of fuel entering the fuel nozzle 12. It is noted that while the premix fuel valve is described in detail below, any suitable actuator(s)/control(s) may be used to control operation of the gas turbine system 10 in accordance with embodiments described herein.

A controller 40 may be electrically coupled to one or more of the sensors 35 to receive signals indicating one or more operating parameters of the gas turbine system 10. For example, the controller 40 may receive a signal from the sensor 35 coupled to the compressor 22 indicating outlet pressure of air 30 from the compressor 22. Further, the controller 40 is electrically coupled to one or more actuators 37 to send signals to control one or more operating parameters of the gas turbine system 10. For example, the controller 40 may send a signal to the actuator 37 coupled to the fuel nozzle 12 to control flow of the fuel entering the fuel nozzle 12.

The controller 40 may control various operations of the gas turbine system 10 using data received from the sensors 35. For example, the controller 40, such as a proportional-integral-derivative (PID) controller, may control one or more operations of the gas turbine system 10 by determining a difference (e.g., error) between a reference signal, indicating a desired operation of the gas turbine system 10, and a feedback signal of one or more measurements from the sensors 35. While a PID controller is described herein, this may include any combination of proportional, integral, and derivative gains suitable for controlling the desired operation of the gas turbine system 10. The controller 40 may reduce the difference over time by adjusting an output signal from the controller 40 to the actuator 37 based on a proportional gain, an integral gain, a derivative gain, or a combination thereof, of the controller 40. For instance, the controller 40 may control the outlet pressure of the combustor by controlling opening or closing of a fuel valve of the fuel nozzle based on a difference between a reference signal of a desired outlet pressure compared to feedback from a pressure sensor on the outlet of the combustor.

The proportional gain may be a term that is proportional to the difference between the reference signal and the feedback signal of the gas turbine. The integral gain may be a term that is proportional to a sum of the difference over a period of time. The derivative gain may be a term that is proportional to the rate of change of the difference. The controller 40 may control the operating parameter based on gains (e.g., terms) that are predetermined and estimated offline based on the components (e.g., combustor, compressor, and turbine blades) of the gas turbine. To account for non-linear parameters in the controller, a tuner may adjust the gains of the controller 40 while the gas turbine system is on-line. Further, the tuner may use a steady state model and a transient model to simulate changes to the gas turbine system. By adjusting the gains of the controller with a tuner that models non-linear parameters of the gas turbine system, the controller may more quickly reduce the difference between the reference signal and the feedback signal of the gas turbine while maintaining stability of the system, thereby improving efficiency of the gas turbine.

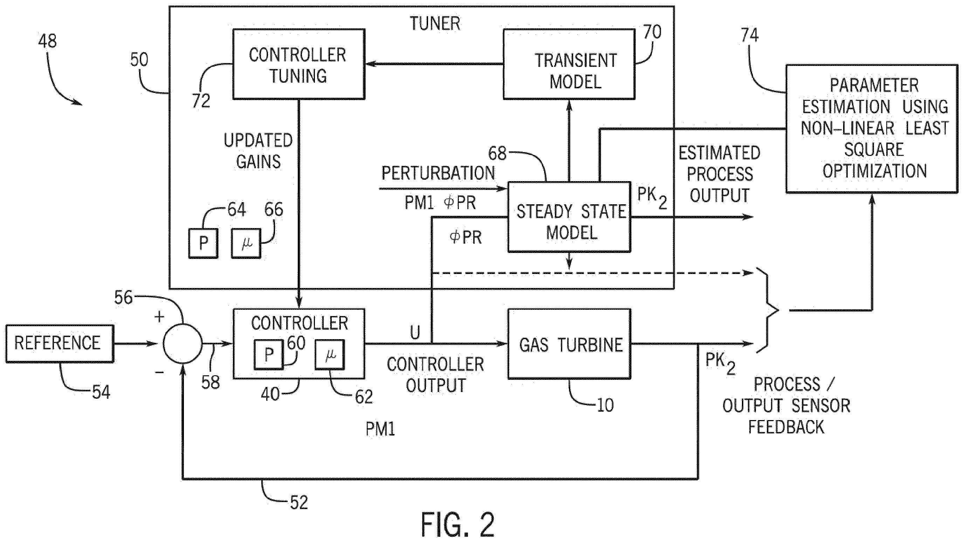

FIG. 2 is a block diagram of a control system 48 that includes a tuner 50 that tunes the controller 40 of the gas turbine system 10. While the tuner 50 is described below as separate from the controller 40, in some embodiments, the tuner 50 may be incorporated into the controller 40 to control one or more operations of the gas turbine system 10. As explained above, the controller 40 controls one or more operations of the gas turbine system 10 based on a feedback signal 52, such as pressure variation feedback from the acoustic sensor 35. A comparator 56 may compare the feedback signal 52 to the reference signal 54 and provide a difference 58 (e.g., error) to the controller 40. The controller 40 may obtain the difference 58 and control one or more operating parameters, such as the premix fuel valve, of the gas turbine system 10 based on the difference. In some embodiments, the comparator 56 may be included as part of the controller 40 or include circuitry in addition to the controller 40. The controller 40 may include PID gains that control response of the controller 40 based on the difference 58.

The controller 40 may include the processor 60 or multiple processors and memory 62. The processor 60 may be operatively coupled to the memory 62 to execute instructions for carrying out the presently disclosed techniques. These instructions may be encoded in programs or code stored in a tangible non-transitory computer-readable medium, such as the memory 62 and/or other storage. The processor 60 may be a general purpose processor (e.g., processor of a desktop/laptop computer), system-on-chip (SoC) device, or integrated circuit (e.g., field programmable gate array (FPGA), application-specific integrated circuit (ASIC), etc.), or some other processor configuration. The memory 62, in the embodiment, includes a computer readable medium, such as, without limitation, a hard disk drive, a solid state drive, diskette, flash drive, a compact disc (CD), a digital video disc, random access memory (RAM), and/or any suitable storage device that enables the processor 60 to store, retrieve, and/or execute instructions and/or data. The memory 62 may include one or more local and/or remote storage devices.

The tuner 50 may include circuitry, such as a processor 64 or multiple processors and memory 66. The processor 64 may be operatively coupled to the memory 66 and may include circuitry similar to the circuitry of the processor 60 and the memory 62 described above with respect to the controller 40. The tuner 50 may include hardware, such as circuitry, and/or software (e.g., code) that instructs the processor 64 to perform steps described below. For example, the processor 64 may obtain instructions that causes the processor 64 to generate a steady state model 68 that models a process of the gas turbine system 10. That is, the steady state model 68 may be a generic model that estimates a process performed by gas turbine systems, such as the gas turbine system 10 of FIG. 1, based on one or more operating parameters. For instance, the steady state model 68 may provide an estimate the compressor outlet pressure based on a command of a position of the premix fuel valve (e.g., fuel splits), stoichiometric ratios, differential pressure across the combustion chamber, and the like.

The steady state model 68 may be a linear, exponential, logarithmic, or other equation, or any other suitable model that relates the one or more operating parameters to an estimated operation of the gas turbine system 10. For instance, the steady state model 68 may be an exponential model that relates a position of the premix fuel valve to measured values received via the acoustic sensor and/or other measurements of the gas turbine system 10, such as:

$$Dyn = F(FF, Amb, A, B \ldots) + C \quad \text{Equation (1)}$$

where Dyn is the estimated amplitude of the pressure variation in the combustor from the model, FF is measured fuel flow 10, and A, B and C are regression constants. Depending on the transfer function of interest (relationship between fuel flow in a particular split and dynamics), the independent parameter feeding in to the model can be perturbed to create a transient model by estimating responses from the gas turbine system 10. Note that while the FF, A, B, C and Amb are given as examples, any suitable independent parameters may be used in conjunction with a transient model term.

The processor 64 may change (e.g., perturb) inputs to the steady state model 68 to generate dynamic outputs that are based on the changes to the sensor readings of the gas turbine system 10. For example, the processor 64 may perturb the premix inputs into the steady state model 68 to generate outputs that are used to create or update a transient model 70 that depends on performance of the gas turbine 10. Perturbing the premix inputs may refer to changing the step input based on anticipated changes in performance of the gas turbine from modeling prior performance of the process. For example, the perturbation on the fuel flow to a particular premix circuit will result in a change in the measured combustion can pressure variation. The dynamics of the pressure variation may be captured by assessing the step response of pressure variations with respect to premix circuit fuel flow. An example of this assessment can be represented as an s-domain transfer function. That is, the steady state model 68 may be a generic model, developed off-line with the gas turbine system 10 not in operation. The transient model 70 may estimate responses that the particular gas turbine system 10 may output due to non-linear variations (e.g., degradation, ambient temperatures, etc.) of the particular gas turbine system 10 with respect to other gas turbines due to the perturbation. In some embodiments, the transient model 70 may be created or updated while the gas turbine system 10 is on-line during which the gas turbine system 10 provides power to loads.

The transient model may include a transfer function which is represented, for example, in s domain as shown in equation 2

$$TF = \frac{As+B}{Cs^2+Ds+E} \quad \text{Equation (2)}$$

where A, B, C, D and E are the transfer function coefficients determined by using any suitable technique, such as recursive least squares based regression.

By perturbing the steady state model 68, the gas turbine system 10 may remain unaffected by the control system 50 creating or updating the transient model 70. That is, the processor 64 may estimate effects of the perturbation of the steady state model 68 without affecting actual operation of the gas turbine system 10. To create or update the transient model 70, the processor 64 may provide a step input (e.g., C) to the steady state model 68. The step input may refer to an instantaneous change to the steady state model 68, which causes the response, referred to as the step response, of the model to change. The processor 64 may estimate the transient model 70 based on the step response to the step input Further, the processor 64 may determine the transient model 70 by calculating a best fit line using techniques like least squares optimization 74 which approximates the step responses to the steady state model 68 over time. The processor 64 may then determine the controller gains such that the predetermined stability margins, such as a gain margin, a phase margin, or both, based on the transient model 70 are satisfied. The tuner 50 may include circuitry and/or instructions of a controller tuner 72 that adjusts the gain of the controller 40. For example, the processor 64 may execute instructions that create or update the controller gains based on stability margins of the transient model 70. The transfer function may relate the output of operations of the gas turbine system 10 to the inputs into the system. Further, the processor 64 may determine a gain of the gas turbine controller 40 based on the transfer function. For example, the processor 64 may determine a proportional gain, an integral gain, a derivative gain, or any combination thereof, based on the stability margins of the steady state model 68 and/or the transient model 70. That is, the processor 64 may determine the terms that describe the proportions to which the controller 40 responds to the difference between the reference signal 54 and the feedback signal 52. For instance, the processor 64 may compute the gains of the controller 40 using direct synthesis in which gains are computed such that the controller gives the desired output based on the best-fit model and the transfer function. Further, the tuner 50 may ensure stability of the controller 40 using the stability margins. The processor 64 may then send a signal to the gas turbine controller 40 to adjust the gain of the controller 40 based on the transfer function.

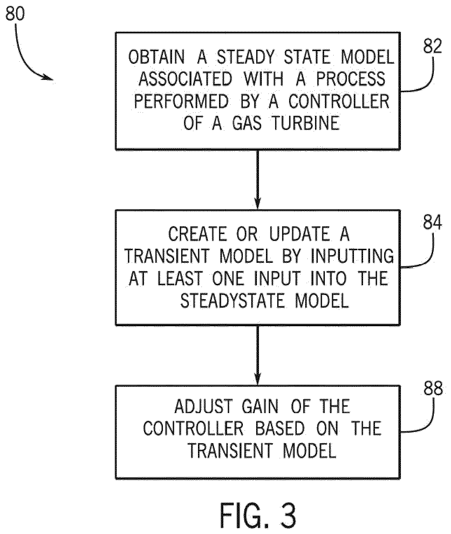

FIG. 3 shows a flow diagram of a process 80 performed by the circuitry and/or instructions on the memory 66 of the tuner 50 of the gas turbine system 10 to adjust the gains of the controller 40. At block 82, the processor 64 may obtain the steady state model 68 associated with an operation of a gas turbine system 10. As mentioned above, the operation may be any suitable operation that is controlled via a controller 40. The steady state model 68 may be a linear, exponential, logarithmic, or any other suitable model depending on the operation being controlled. The steady state model 68 may generally model outputs of a process of the gas turbine based on inputs into the process of the gas turbine. At block 84, the processor 64 may create or update the transient model 70 by inputting at least one input to change the steady state model 68 based on the particular gas turbine system 10 being tuned. For example, the processor 64 may provide a step input into the steady state model 68 that perturbs an input parameter provided to the steady state model 68. As explained above, to create the transient model, the processor 64 may perturb the inputs into the steady state model 68 to estimate the at least one output. The at least one output may include transient characteristics of the gas turbine that reflect the expected outputs of the gas turbine in the event of changes in operating parameters (e.g., a step response of pressure variations with respect to premix circuit fuel flow) of the gas turbine.

The outputs of the steady state model 68 after the step input may be used to estimate expected output parameters of the gas turbine system 10. Further, the processor 64 may determine stability margins based on the transient model 70 and existing controller gains. The stability margins may refer to an amount of gain or phase variations from which the process may lose stability

As explained above, transient model may include, for example, the transfer function associated with control of the operation based on the relationships between the inputs and the outputs described by the steady state model 68 and/or the transient model 70. The transfer function may define a ratio between the outputs and the inputs of the operation being controlled. The transfer function may be determined by taking a Laplace transform, z-transforms, or any other suitable method for example recursive least squares estimation.

Further, the processor 64 may determine a proportional gain, an integral gain, a derivative gain, or any combination thereof, of the controller 40 based on the relationship. For example, for the proportional gain, the processor 64 may determine the proportion to which the controller 40 responds to the difference between the reference signal and the feedback signal that minimizes the difference during operation while maintaining stability based on the gain and/or phase margins.

At block 88, the processor 64 may adjust a gain of the controller 40 based on the transfer function. In some embodiments, the tuner 50 may send a signal indicating the adjustment to the gain to the controller 40. The controller 40 may then receive the signal and adjust the gain based on the received signal. In certain embodiments, the tuner 50 may be incorporated into the controller 40 and control the operation of the gas turbine system 10 based on the adjusted gain. By adjusting the gain of the controller 40, the tuner 50 may enable the controller 40 of the gas turbine system 10 to adapt the gains used to control the operation based on the data from the sensors 35 of the gas turbine system 10 while the gas turbine system 10 is in operation. Further, the control system 50 may allow the controller 40 to be less reliant on the accuracy of offline models that are not specific to the particular gas turbine system 10 in operation. Moreover, the control system 50 may adjust the gains of the controller 40 without perturbing the gas turbine system 10 by perturbing the steady state model 68 to develop the transient model 70.

Technical effects of the present disclosure include adjusting gains of a controller that controls operation of a gas turbine. The controller may obtain a steady state model of an operation performed by the gas turbine. The controller may create or update a transient model by inputting at least one input into the steady state model, wherein the transient model depends on performance of the gas turbine. The controller may create or update a transfer function associated with the operation of the gas turbine based on stability margins from the steady state model and/or the transient model. The controller may adjust the gain of the controller based on the transfer function. In some embodiments, the controller may transmit a signal indicating the adjustment to the gain of the controller. In other embodiments, the controller may control the operation of the gas turbine based on the adjusted gain. By adjusting the gain of the controller, the operation of the controller adapts to improve output of the gas turbine system 10 from degradation or ambient conditions.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following clauses:

1. A control system for a gas turbine, comprising:

a controller configured to:

obtain a difference between a reference signal and a feedback signal of the gas turbine; and
control a process of the gas turbine based on the difference and a gain of the controller, wherein the gain corresponds to a response of the controller with respect to the difference; and

a tuner configured to:

obtain a steady state model configured to estimate at least one output of the process based on at least one input to the process;
create a transient model by perturbing at least one input of the steady state model to estimate the at least one output, the at least one output comprising transient characteristics of the gas turbine;
adjust the gain of the controller continuously or at predetermined intervals or based on a requirement trigger based on the transient model; and

send the adjusted gain to the controller, wherein the controller is configured to control the process based on the adjusted gain.

2. The control system of clause 1, wherein the processor is configured to create the transient model to adjust the at least one output of the process based on non-linearities in the control system.

3. The control system of clause 1, wherein the processor is configured to estimate the at least one output on the system using the steady state model to create the transient model without perturbing the operation of the gas turbine.

4. The control system of clause 1, wherein the processor is configured to create a transient model by perturbing at least one input of the steady state model estimating the output which includes the transient characteristics.

5. The control system of clause 4, wherein the processor is configured to determine the best fit using an least squares method that calculates a line based on the at least one input and the at least two estimated outputs.

6. The control system of clause 1, wherein the controller comprises a proportional-integral controller, and wherein the gain comprises a proportional gain, an integral gain, or both, wherein the proportional gain varies the at least one output of the controller in proportion to a magnitude of the difference, and wherein the integral gain varies the at least one output of the controller in proportion to a sum of the magnitude of the difference over a period of time.

7. The control system of clause 1, wherein the controller is configured to adjust the gain at periodic intervals during operation of the gas turbine.

8. The control system of clause 1, wherein the controller is configured to control stability of the gain based on stability margins determined via the transient model.

9. The control system of clause 1, wherein the controller is configured to adjust the transient model over time based at least in part on hardware degradation of the gas turbine.

10. A method, comprising:

obtaining, via a processor, a steady state model that models a process controlled by a controller of a gas turbine, wherein the steady state model estimates at least one output of the process based on at least one input;
creating, via the processor, a transient model by perturbing at least one input of the steady state model to estimate the at least one output, the at least one output comprising transient characteristics of the gas turbine;
adjusting, via the processor, a gain of the controller continuously, at predetermined intervals, or based on a requirement trigger, or any combination thereof, based on the transient model, wherein the gain defines a response to a difference between a reference signal and a feedback signal of the controller of the gas turbine; and

sending, via the processor, the adjusted gain to the controller, wherein the controller is configured to control the process based on the adjusted gain.

11. The method of clause 10, comprising adjusting the gain while the gas turbine is in operation.

12. The method of clause 10, comprising determining a gain margin, a phase margin, or any combination thereof, based on the transient model to ensure stability of the adjusted gain of the controller.

13. The method of clause 10, comprising creating a transient model having a transfer function in an s-domain.

14. The method of clause 10, wherein the steady state model comprises a linear, exponential, or logarithmic equation.

15. A non-transitory computer readable medium comprising instructions configured to be executed by a processor of a tuner, wherein the instructions comprise instructions configured to cause the processor to:

obtain a steady state model that models a process controlled by a controller of a gas turbine, wherein the steady state model estimates at least one output of the process based on at least one input;
create a transient model by perturbing at least one input of the steady state model to estimate the at least one output, the at least one output comprising transient characteristics of the gas turbine;

adjust the gain of the controller continuously or at predetermined intervals or based on a requirement trigger based on the transient model; and

send the adjusted gain to the controller, wherein the controller is configured to control the process based on the adjusted gain.

16. The non-transitory computer readable medium of clause 15, wherein the steady state model comprises an equation that relates the at least one output to a term associated with the at least one input and a step input that is used to create or update the transient model.

17. The non-transitory computer readable medium of claim 15, comprising instructions configured to create a transient model that adapts the controller to non-linearities in the control system.

18. The non-transitory computer readable medium of clause 15, comprising instructions configured to cause the processor to estimate the at least one output of the process using the steady state model to determine the transient model without perturbing the operation of the gas turbine.

19. The non-transitory computer readable medium of clause 15, comprising instructions configured to cause the processor to create the transient model by determining a best fit between at least two estimated outputs of the gas turbine system.

20. The non-transitory computer readable medium of clause 15, comprising instructions configured to cause the processor to adjust the gain while the gas turbine is in operation.

**Claims**

1. A control system (48, 50) for a gas turbine (10), comprising:

a controller (40) configured to:

obtain a difference between a reference signal (54) and a feedback signal (52) of the gas turbine (10); and
control a process of the gas turbine (10) based on the difference and a gain of the controller (40), wherein the gain corresponds to a response of the controller (40) with respect to the difference; and

a tuner (50) configured to:

obtain a steady state model (68) configured to estimate at least one output of the process based on at least one input to the process;
create a transient model (70) by perturbing at least one input of the steady state model (68) to estimate the at least one output, the at least one output comprising transient characteristics of the gas turbine (10);
adjust the gain of the controller (40) continuously or at predetermined intervals or based on a requirement trigger based on the transient model (70); and
send the adjusted gain to the controller (40), wherein the controller (40) is configured to control the process based on the adjusted gain.

2. The control system (48, 50) as claimed in claim 1, wherein the processor (64) is configured to create the transient model (70) to adjust the at least one output of the process based on non-linearities in the control system (48, 50).

3. The control system (48, 50) as claimed in claim 1, wherein the processor (64) is configured to estimate the at least one output on the system (48, 50) using the steady state model (68) to create the transient model (70) without perturbing the operation of the gas turbine (10).

4. The control system (48, 50) as claimed in claim 1, wherein the processor (64) is configured to create a transient model (70) by perturbing at least one input of the steady state model (68) estimating the output which includes the transient characteristics.

5. The control system (48, 50) as claimed in claim 4, wherein the processor (64) is configured to determine the best fit using an least squares method (74) that calculates a line based on the at least one input and the at least two estimated outputs.

6. The control system (48, 50) as claimed in claim 1, wherein the controller comprises a proportional-integral controller (40), and wherein the gain comprises a proportional gain, an integral gain, or both, wherein the proportional gain varies the at least one output of the controller (40) in proportion to a magnitude of the difference, and wherein the integral gain varies the at least one output of the controller (40) in proportion to a sum of the magnitude of the difference over a period of time.

7. The control system (48, 50) as claimed in claim 1, wherein the controller (40) is configured to adjust the gain at periodic intervals during operation of the gas turbine (10).

8. The control system (48, 50) as claimed in claim 1, wherein the controller (40) is configured to control stability of the gain based on stability margins determined via the transient model (70).

9. The control system (48, 50) as claimed in claim 1, wherein the controller (40) is configured to adjust the transient model (70) over time based at least in part on hardware degradation of the gas turbine (10).

10. A method (80), comprising:

obtaining (82), via a processor (64), a steady state model (68) that models a process controlled by a controller (40) of a gas turbine (10), wherein the steady state model (68) estimates at least one output of the process based on at least one input;
creating (84), via the processor (64), a transient model (70) by perturbing at least one input of the steady state model (68) to estimate the at least one output, the at least one output comprising transient characteristics of the gas turbine (10);
adjusting (88), via the processor (64), a gain of the controller (40) continuously, at predetermined intervals, or based on a requirement trigger, or any combination thereof, based on the transient model (70), wherein the gain defines a response to a difference between a reference signal (54) and a feedback signal (52) of the controller (40) of the gas turbine (10); and

sending, via the processor (64), the adjusted gain to the controller (40), wherein the controller (40) is configured to control the process based on the adjusted gain.

11. The method (80) as claimed in claim 10, comprising adjusting the gain while the gas turbine (10) is in operation.

12. The method (80) as claimed in claim 10, comprising determining a gain margin, a phase margin, or any combination thereof, based on the transient model (70) to ensure stability of the adjusted gain of the controller (40).

13. The method (80) as claimed in claim 10, comprising creating a transient model (70) having a transfer function in an s-domain.

14. The method (80) as claimed in claim 10, wherein the steady state model (68) comprises a linear, exponential, or logarithmic equation.

15. A non-transitory computer readable medium (62) comprising instructions configured to be executed by a processor (60) of a tuner (50), wherein the instructions comprise instructions configured to cause the processor (60) to:

obtain a steady state model (68) that models a process controlled by a controller (40) of a gas turbine (10), wherein the steady state model (68) estimates at least one output of the process based on at least one input;

create a transient model (70) by perturbing at least one input of the steady state model (68) to estimate the at least one output, the at least one output comprising transient characteristics of the gas turbine (10);

adjust the gain of the controller (40) continuously or at predetermined intervals or based on a requirement trigger based on the transient model (70); and

send the adjusted gain to the controller (40), wherein the controller (40) is configured to control the process based on the adjusted gain.

FIG. 1

FIG. 2

EP 3 346 344 A1

80

OBTAIN A STEADY STATE MODEL ASSOCIATED WITH A PROCESS PERFORMED BY A CONTROLLER OF A GAS TURBINE — 82

CREATE OR UPDATE A TRANSIENT MODEL BY INPUTTING AT LEAST ONE INPUT INTO THE STEADYSTATE MODEL — 84

ADJUST GAIN OF THE CONTROLLER BASED ON THE TRANSIENT MODEL — 88

FIG. 3

Europäisches
Patentamt
European
Patent Office
Office européen
des brevets

# EUROPEAN SEARCH REPORT

**Application Number**

EP 17 20 9002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 457 846 A2 (ROLLS ROYCE PLC [GB]) 15 September 2004 (2004-09-15) * figure 6 * * paragraph [0022] * * paragraph [0025] - paragraph [0026] * ----- | 1-15 | INV. G05B13/04 F02C9/00 |
| X | EP 2 506 095 A2 (GEN ELECTRIC [US]) 3 October 2012 (2012-10-03) * figure 1 * * paragraph [0022] * * paragraph [0031] - paragraph [0033] * * claim 8 * ----- | 1-15 | |
| E | EP 3 263 985 A1 (GEN ELECTRIC [US]) 3 January 2018 (2018-01-03) * figure 2 * * paragraph [0023] - paragraph [0026] * ----- | 1-4, 6-12,14, 15 | |
| A | AYDOGAN SAVRAN ET AL: "A fuzzy model based adaptive PID controller design for nonlinear and uncertain processes", ISA TRANSACTIONS., vol. 53, no. 2, 1 March 2014 (2014-03-01), pages 280-288, XP055475291, US ISSN: 0019-0578, DOI: 10.1016/j.isatra.2013.09.020 * figure 1 * ----- | 1-15 | TECHNICAL FIELDS SEARCHED (IPC) G05B G06N F02C F02D |

The present search report has been drawn up for all claims

| Place of search | Date of completion of the search | Examiner |
|---|---|---|
| The Hague | 17 May 2018 | Werner, Christopher |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 346 344 A1**

## ANNEX TO THE EUROPEAN SEARCH REPORT
## ON EUROPEAN PATENT APPLICATION NO.

EP 17 20 9002

This annex lists the patent family members relating to the patent documents cited in  the above-mentioned European search report.
The members are as contained in the European Patent Office EDP file on
The European Patent Office is in no way liable for these particulars which are merely given for the purpose of information.

17-05-2018

| Patent document cited in search report | | Publication date | Patent family member(s) | | Publication date |
|---|---|---|---|---|---|
| EP 1457846 | A2 | 15-09-2004 | EP | 1457846 A2 | 15-09-2004 |
| | | | GB | 2399425 A | 15-09-2004 |
| | | | US | 2005033500 A1 | 10-02-2005 |
| EP 2506095 | A2 | 03-10-2012 | EP | 2506095 A2 | 03-10-2012 |
| | | | US | 2012253478 A1 | 04-10-2012 |
| EP 3263985 | A1 | 03-01-2018 | EP | 3263985 A1 | 03-01-2018 |
| | | | US | 2017344032 A1 | 30-11-2017 |

EPO FORM P0459

For more details about this annex : see Official Journal of the European Patent Office, No. 12/82